(19) Europäisches Patentamt
European Patent Office
Office européen des brevets

(11) **EP 3 772 228 A1**

(12) **EUROPEAN PATENT APPLICATION**

(43) Date of publication:
**03.02.2021 Bulletin 2021/05**

(51) Int Cl.:
**H04W 68/02** (2009.01)　　　**H04W 88/02** (2009.01)
**H04W 88/08** (2009.01)

(21) Application number: **19189894.9**

(22) Date of filing: **02.08.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Panasonic Intellectual Property
Corporation
of America
Torrance, CA 90503 (US)**

(72) Inventors:
• **KUANG, Quan
63225 Langen (DE)**
• **SUZUKI, Hidetoshi
Osaka-shi, Osaka 540-6207 (JP)**
• **LI, Hongchao
63225 Langen (DE)**
• **TAO, Ming-Hung
63225 Langen (DE)**

(74) Representative: **Grünecker Patent- und
Rechtsanwälte
PartG mbB
Leopoldstraße 4
80802 München (DE)**

(54) **USER EQUIPMENT AND SCHEDULING NODE**

(57)　　Provided are a user equipment (UE), a scheduling node, and respective paging methods for a UE and a scheduling node. The UE comprises a transceiver which, in operation, receives at least one physical downlink control channel, PDCCH from which allocation of a paging time instance to be monitored for paging downlink control information, DCI, is determinable, and circuitry which, in operation, determines the allocation of the paging time instance to be monitored based on the received at least one PDCCH, wherein the transceiver, in operation, performs monitoring for the paging DCI based on the determination of the allocation of the paging time instance.

```
S1010
  ┌─────────────────────────┐
  │ Perform allocation of   │
  │ paging time instance    │
  └─────────────────────────┘
              │
S1020         ▼
  ┌─────────────────────────┐
  │ Generate PDCCH          │
  └─────────────────────────┘
              │
S1030         ▼                    S1040
  ┌─────────────────────────┐      ┌─────────────────────────┐
  │ Transmit PDCCH          │─────▶│ Receive PDCCH           │
  └─────────────────────────┘      └─────────────────────────┘
              │                                 │
              │                     S1050       ▼
              │                     ┌─────────────────────────┐
              │                     │ Determine allocation of │
              │                     │ paging time instance    │
              │                     └─────────────────────────┘
S1060         ▼                    S1070         ▼
  ┌─────────────────────────┐      ┌─────────────────────────┐
  │ Transmit paging DCI     │─────▶│ Monitor paging DCI      │
  └─────────────────────────┘      └─────────────────────────┘
```

Fig. 10

EP 3 772 228 A1

**Description**

**BACKGROUND**

**1. Technical Field**

The present disclosure relates to transmission and reception of signals in a communication system. In particular, the present disclosure relates to methods and apparatuses for such transmission and reception.

**2. Description of the Related Art**

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE, LTE-A, and NR, further modifications and options may facilitate efficient operation of the communication system as well as particular devices pertaining to the system.

**SUMMARY**

One non-limiting and exemplary embodiment facilitates efficiently utilizing resources including UE power and a channel occupancy time when paging is performed or scheduled in the channel occupancy time.

In an embodiment, the techniques disclosed herein feature a user equipment, UE, comprising a transceiver which, in operation, receives at least one physical downlink control channel, PDCCH from which allocation of a paging time instance to be monitored for paging downlink control information, DCI, is determinable, and circuitry which, in operation, determines the allocation of the paging time instance to be monitored based on the received at least one PDCCH, wherein the transceiver, in operation, performs monitoring for the paging DCI based on the determination of the allocation of the paging time instance.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

**BRIEF DESCRIPTION OF DRAWINGS**

In the following, exemplary embodiments are described in more detail with reference to the attached figures and drawings.

Fig. 1    is a schematic drawing showing an exemplary architecture for a 3GPP NR system;
Fig. 2    is a block diagram which shows an exemplary user and control plane architecture for the LTE eNB, gNB, and UE;
Fig. 3    is a schematic drawing which shows functional split between NG-RAN and 5GC;
Fig. 4    is a sequence diagram for RRC connection setup/reconfiguration procedures;
Fig. 5    is a schematic drawing showing usage scenarios of Enhanced mobile broadband, Massive Machine Type Communications (mMTC) and Ultra Reliable and Low Latency Communications (URLLC);
Fig. 6    is a block diagram which shows an exemplary 5G system architecture;
Fig. 7    is a block diagram which shows a user equipment (UE) and a scheduling node;
Fig. 8    is a block diagram showing dynamic paging allocation determination circuitry of a UE:
Fig. 9    is a block diagram showing dynamic paging allocation circuitry of a scheduling node;
Fig. 10   is a flow chart showing steps of a paging method for a UE and a paging method for a scheduling node;
Fig. 11   is a diagram showing an exemplary allocation of PDCCH monitoring occasions and paging time instances;
Fig. 12   is a flow chart showing steps of an exemplary paging method for a UE;
Fig. 13   is a diagram showing an exemplary allocation of PDCCH monitoring occasions and paging time instances
Fig. 14   is a flow chart showing steps of an exemplary paging method for a UE;
Fig. 15   is a diagram showing an exemplary allocation of PDCCH monitoring occasions and paging time instances;
Fig. 16   is a flow chart showing steps of an exemplary paging method for a UE; and

**Fig. 17**  is a diagram illustrating details of channel occupancy (CO) PDCCH signaling.

## DETAILED DESCRIPTION

*5G NR system architecture and protocol stacks*

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

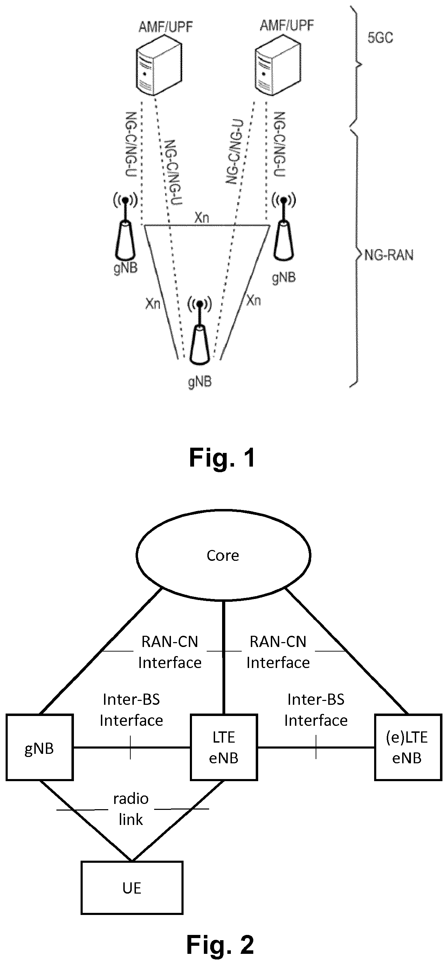

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

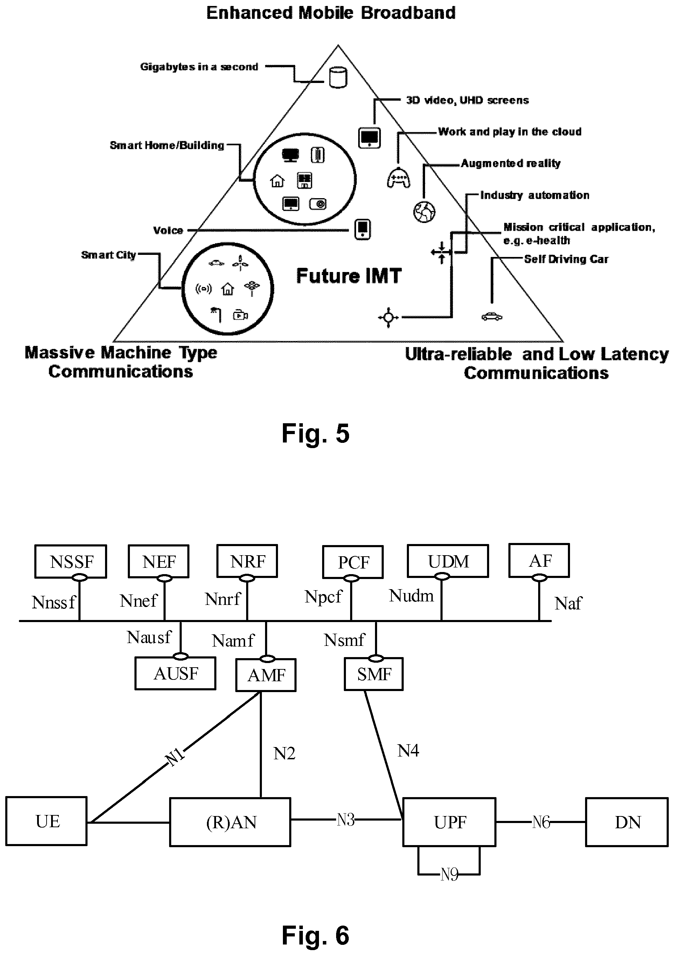

Various different deployment scenarios can be supported (see e.g. 3GPP TR 38.801 v14.0.0). For instance, a non-centralized deployment scenario (see e.g. section 5.2 of TR 38.801; a centralized deployment is illustrated in section 5.4) is presented therein, where base stations supporting the 5G NR can be deployed. **Fig. 2** illustrates an exemplary non-centralized deployment scenario (see e.g. Figure 5.2.-1 of said TR 38.801), while additionally illustrating an LTE eNB as well as a user equipment (UE) that is connected to both a gNB and an LTE eNB. The new eNB for NR 5G may be exemplarily called gNB. An eLTE eNB is the evolution of an eNB that supports connectivity to the EPC (Evolved Packet Core) and the NGC (Next Generation Core).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. One physical channel is the PRACH (Physical Random Access Channel) used for the random access.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability ($1\text{-}10^{-5}$ within 1ms). Finally, mMTC may preferably require high connection density (1,000,000 devices/$km^2$ in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration $T_u$ and the subcarrier spacing $\Delta f$ are directly related through the formula $\Delta f = 1 / T_u$. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0).

*5G NR functional split between NG-RAN and 5GC*

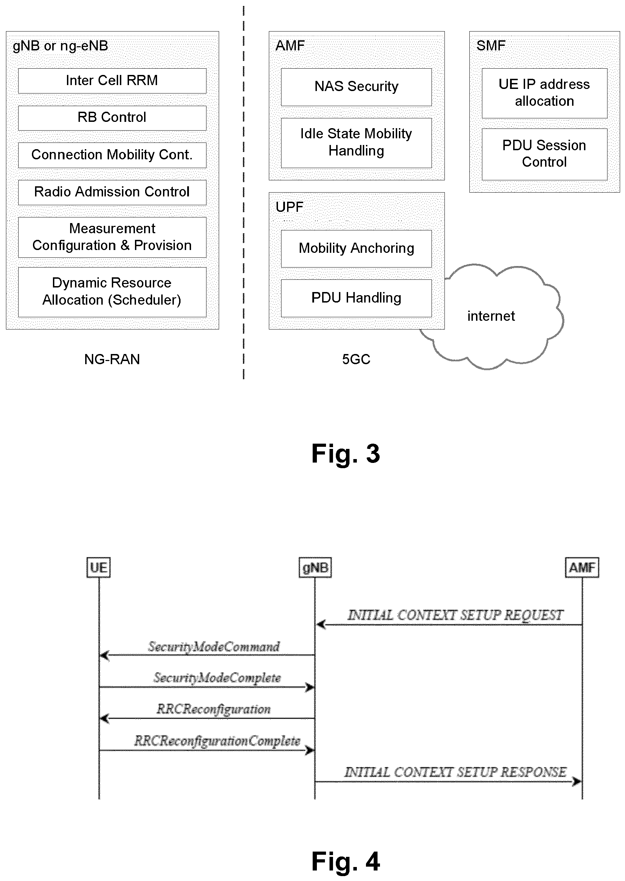

**Fig. 3** illustrates functional split between NG-RAN and 5GC. NG-RAN logical node is a gNB or ng-eNB. The 5GC has logical nodes AMF, UPF and SMF.

In particular, the gNB and ng-eNB host the following main functions:

- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:

- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:

- Anchor point for Intra-/Inter-RAT mobility (when applicable);

- External PDU session point of interconnect to Data Network;

- Packet routing & forwarding;

- Packet inspection and User plane part of Policy rule enforcement;

- Traffic usage reporting;

- Uplink classifier to support routing traffic flows to a data network;

- Branching point to support multi-homed PDU session;

- QoS handling for user plane, e.g. packet filtering, gating, UL/DL rate enforcement;

- Uplink Traffic verification (SDF to QoS flow mapping);

- Downlink packet buffering and downlink data notification triggering.

Finally, the Session Management function, SMF, hosts the following main functions:

- Session Management;

- UE IP address allocation and management;

- Selection and control of UP function;

- Configures traffic steering at User Plane Function, UPF, to route traffic to proper destination;

- Control part of policy enforcement and QoS;

- Downlink Data Notification.

*RRC connection setup and reconfiguration procedures*

**Fig. 4** illustrates some interactions between a UE, gNB, and AMF (an 5GC entity) in the context of a transition of the UE from RRC_IDLE to RRC_CONNECTED for the NAS part (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a Security-ModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB (or gNB), and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

*Usage Scenarios of IMT for 2020 and beyond*

**Fig. 5** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 5 illustrates some examples of envisioned usage scenarios for IMT for 2020 and beyond.

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From RAN1 perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLCC in Rel. 15 include Augmented Reality/Virtual Reality (AR/VR), e-health, e-safety, and mission-critical applications.

Moreover, technology enhancements targeted by NR URLCC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLCC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10-6 level), higher availability, packet sizes of up to 256 bytes, time synchronization down to the order of a few $\mu$s where the value can be one or a few $\mu$s depending on frequency range and short latency in the order of 0.5 to 1 ms in particular a target user plane latency of 0.5 ms, depending on the use cases.

Moreover, for NR URLCC, several technology enhancements from RAN1 perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen or twelve symbols).

In slot-based scheduling or assignment, a slot corresponds to the timing granularity (TTI - transmission time interval) for scheduling assignment. In general, TTI determines the timing granularity for scheduling assignment. One TTI is the time interval in which given signals is mapped to the physical layer. For instance, conventionally, the TTI length can vary from 14-symbols (slot-based scheduling) to 2-symbols (non-slot based scheduling). Downlink (DL) and uplink (UL) transmissions are specified to be organized into frames (10 ms duration) consisting of 10 subframes (1 ms duration). In slot-based transmission, a subframe is further divided into slots, the number of slots being defined by the numerology / subcarrier spacing. The specified values range between 10 slots per frame (1 slot per subframe) for a subcarrier spacing of 15 kHz to 80 slots per frame (8 slots per subframe) for a subcarrier spacing of 120 kHz. The number of OFDM symbols per slot is 14 for normal cyclic prefix and 12 for extended cyclic prefix (see section 4.1 (general frame structure), 4.2 (Numerologies), 4.3.1 (frames and subframes) and 4.3.2 (slots) of the 3GPP TS 38.211 V15.3.0, Physical channels and modulation, 2018-09). However, assignment of time resources for transmission may also be non-slot based. In particular, the TTIs in non slot-based assignment may correspond to mini-slots rather than slots. I.e., one or more mini-slots may be assign to a requested transmission of data/control signaling. In non slot-based assignment, the minimum length of a TTI may for instance be 1 or 2 OFDM symbols.

*QoS control*

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 4. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 6** illustrates a 5G NR non-roaming reference architecture (see TS 23.501 v16.1.0, section 4.23). An Application Function (AF), e.g. an external application server hosting 5G services exemplary described in Fig.5, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

**Fig. 6** shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services.

A terminal or user terminal, or user device is referred to in the LTE and NR as a user equipment (UE). This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay.

A base station is a network node, e.g. forming a part of the network for providing services to terminals. A base station is a network node or scheduling node, which provides wireless access to terminals. Communication between the terminal and the base station is typically standardized. In LTE and NR, the wireless interface protocol stack includes physical layer, medium access layer (MAC) and higher layers. In control plane, higher-layer protocol Radio Resource Control protocol is provided. Via RRC, the base station can control configuration of the terminals and terminals may communicate with the base station to perform control tasks such as connection and bearer establishment, modification, or the like, measurements, and other functions. The terminology used in LTE is eNB (or eNodeB), while the currently used terminology for 5G NR is gNB.

Services for transfer of data provided by a layer to the higher layers are usually referred to as channels. For example, the LTE and the NR distinguish logical channels provided for higher layers by the MAC layer, transport channels provided by the physical layer to the MAC layer and physical channels which define mapping on the physical resources.

Logical channels are different kinds of data transfer services as offered by MAC. Each logical channel type is defined by what type of information is transferred. Logical channels are classified into two groups: Control Channels and Traffic Channels. Control channels are used for the transfer of control plane information only. Traffic channels are used for the transfer of user plane information only.

Logical Channels are then mapped by the MAC layer onto transport channels. For example, logical traffic channels and some logical control channels may be mapped onto the transport channel referred to as downlink shared channel DL-SCH in downlink and onto the transport channel referred to as uplink shared channel UL-SCH in uplink.

*Downlink control channel monitoring, PDCCH, DCI*

Many of the functions operated by the UE involve the monitoring of a downlink control channel (e.g. the PDCCH, see 3GP TS 38.300 v15.6.0, section 5.2.3) to receive e.g. particular control information or data destined to the UE.

As mentioned above, the PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed downlink control information, DCI) has the same purpose in 5G NR as the DCI in LTE, namely being a special set of control information that e.g. schedules a downlink data channel (e.g. the PDSCH) or an uplink data channel (e.g. PUSCH). In 5G NR there are a number of different DCI Formats defined already (see TS 38.212 v15.6.0 section 7.3.1).

The PDCCH monitoring of each of these functions serves a particular purpose and is thus started to said end. The PDCCH monitoring is typically controlled at least based on a timer, operated by the UE. The timer has the purpose of controlling the PDCCH monitoring, e.g. limiting the maximum amount of time that the UE is to monitor the PDCCH. For instance, the UE may not need to indefinitely monitor the PDCCH, but may stop the monitoring after some time so as to be able to save power. Correspondingly, a timer may be started when the UE starts the PDCCH monitoring for the intended purpose. Then, when the timer expires, the UE may stop the PDCCH monitoring for the intended purpose, and has the opportunity to save power.

*Paging Procedures in 5G NR*

An exemplary implementation of the paging function in 5G NR that involves PDCCH monitoring, according to the currently standardized version, will be explained in a simplified and abbreviated form in the following.

There are two different paging procedures in 5G NR, a RAN-based paging procedure (e.g. based on RAN-based notification areas) and a core-network-based paging procedure (see for instance 3GPP TS 38.300 v15.6.0, TS 38.304 v15.4.0, and TS 38.331 v15.6.0 referring to RAN paging and CN paging in several sections thereof, such as section 9.2.5 "Paging" in TS 38.300).

Paging allows the network to reach UEs in RRC_IDLE and RRC_INACTIVE state through Paging messages, and to notify UEs in RRC_IDLE, RRC_INACTIVE, and RRC_CONNECTED state of system information change and public warning information (such as ETWS/CMAS, Earthquake and Tsunami Warning System/ Commercial Mobile Alert System) indications through Short Messages. Both the paging messages and the Short Messages are addressed with P-RNTI (Paging-Radio Network Temporary identifier) on the PDCCH to be monitored by the UE. But while the actual paging messages (e.g. with the paging records) are then sent on PCCH (Paging Control Channel), as indicated by the PDCCH, the Short Messages can be sent over PDCCH directly.

While in RRC_IDLE the UE monitors the paging channels for CN-initiated paging, in RRC_INACTIVE the UE also monitors paging channels for RAN-initiated paging. A UE need not monitor paging channels continuously though; Paging DRX is defined where the UE in RRC_IDLE or RRC_INACTIVE is only required to monitor paging channels during one Paging Occasion (PO) per DRX cycle (see 3GPP TS 38.304 v15.3.0, e.g. sections 6.1 and 7.1). The Paging DRX cycles are configured by the network.

The POs of a UE for CN-initiated and RAN-initiated paging are based on the same UE ID, resulting in overlapping POs for both. The number of different POs in a DRX cycle is configurable via system information, and a network may distribute UEs to those POs based on their IDs. A PO is a set of PDCCH monitoring occasions and can consist of multiple time slots (e.g. subframe or OFDM symbol) where paging DCI can be sent. One Paging Frame (PF) is one Radio Frame and may contain one or multiple PO(s) or starting point of a PO.

When in RRC_CONNECTED, the UE monitors the paging channels in any PO signaled in system information for a System Information (SI) change indication and/or a PWS (Public Warning System) notification. In case of Bandwidth Adaptation (BA) (see section 6.10 in TS 38.300), a UE in RRC_CONNECTED only monitors paging channels on the active BWP with common search space configured.

When the UE receives a paging message, the PDCCH monitoring can be stopped by the UE. Depending on the paging cause, the UE may continue with e.g. obtaining system information, or establishing the RRC connection with the base station and then receiving the traffic/instruction from the network.

For instance, according to a paging configuration of 3GPP NR Release-15, a UE monitors a paging PDCCH according to the configuration of the paging occasion (PO) and the paging frame (PF). A PO is a set of paging PDCCH monitoring occasions, each of which corresponds to one transmitted beam in multi-beam operation. Therein, the same paging message is repeated in all transmitted beams. Accordingly, the UE assumes that the same paging message is repeated in all transmitted beams and thus the selection of the beam(s) for the reception of the paging message is up to UE implementation. The paging message is same for both RAN initiated paging and CN initiated paging.

The UE initiates RRC Connection Resume procedure upon receiving RAN initiated paging. If the UE receives a CN initiated paging in RRC_INACTIVE state, the UE moves to RRC_IDLE and informs NAS.

The UE is configured with the PF and the PO semi-statically with respect to SFN (System Frame Number), based on formula including SFN, UE_ID, and other RRC configured parameters. The PF and PO for paging are determined by the following formulae (cf. section 7.1 of 38.304 v15.3.0, User Equipment (UE) procedures in Idle mode and RRC Inactive state, 2019-03):

SFN for the PF is determined by:

$$(\text{SFN} + \text{PF\_offset}) \bmod T = (T \text{ div } N)*(\text{UE\_ID} \bmod N)$$

Index (i_s), indicating the index of the PO is determined by:

$$i\_s = floor\ (UE\_ID/N)\ mod\ Ns.$$

The PDCCH monitoring occasions for paging are determined according to *pagingSearchSpace* as specified in 3GPP TS 38.213: "NR; Physical layer procedures for control" V15.5.0, and *firstPDCCH-MonitoringOccasionOfPO* if configured as specified in 3GPP TS 38.331: "NR; Radio Resource Control (RRC) - Protocol Specification" V15.6.0. When *SearchSpaceId* = 0 is configured for *pagingSearchSpace,* the PDCCH monitoring occasions for paging are same as for RMSI as defined in clause 13 in TS 38.213.

When *SearchSpaceId* = 0 is configured for *pagingSearchSpace,* Ns is either 1 or 2. For Ns = 1, there is only one PO which starts from the first PDCCH monitoring occasion for paging in the PF. For Ns = 2, PO is either in the first half frame (i_s = 0) or the second half frame (i_s = 1) of the PF.

When *SearchSpaceId* other than 0 is configured for *pagingSearchSpace,* the UE monitors the $(i\_s + 1)^{th}$ PO. A PO is a set of 'S' consecutive PDCCH monitoring occasions where 'S' is the number of actual transmitted SSBs determined according to *ssb-PositionsInBurst* in *SIB1* (System Information Block 1). The $K^{th}$ PDCCH monitoring occasion for paging in the PO corresponds to the $K^{th}$ transmitted SSB. The PDCCH monitoring occasions for paging which do not overlap with UL symbols (determined according to *tdd-UL-DL-ConfigurationCommon*) are sequentially numbered from zero starting from the first PDCCH monitoring occasion for paging in the PF. When *firstPDCCH-MonitoringOccasionOfPO* is present, the starting PDCCH monitoring occasion number of $(i\_s + 1)^{th}$ PO is the $(i\_s + 1)^{th}$ value of the *firstPDCCH-MonitoringOccasionOfPO* parameter; otherwise, it is equal to i_s * S.

It should be noted that a PO associated with a PF may start in the PF or after the PF. Moreover, the PDCCH monitoring occasions for a PO can span multiple radio frames. When *SearchSpaceId* other than 0 is configured for *paging-SearchSpace* the PDCCH monitoring occasions for a PO can span multiple periods of the paging search space.

In the above formulae, The following parameters are used for the calculation of PF and i_s:

T: DRX cycle of the UE (T is determined by the shortest of the UE specific DRX value, if configured by RRC or upper layers, and a default DRX value broadcast in system information. If UE specific DRX is not configured by RRC or by upper layers, the default value is applied).

N: number of total paging frames in T

Ns: number of paging occasions for a PF

PF_offset: offset used for PF determination

UE_ID: 5G-S-TMSI mod 1024

Parameters *Ns, nAndPagingFrameOffset,* and the length of default DRX Cycle are signaled in SIB1 (System Information Block 1). The values of N and PF_offset are derived from the parameter *nAndPagingFrameOffset* as defined in 3GPP TS 38.331: "NR; Radio Resource Control (RRC) - Protocol Specification" V15.6.0. The parameter *first-PDCCH-MonitoringOccasionOfPO* is signalled in SIB1 for paging in initial DL BWP. For paging in a DL BWP other than the initial DL BWP, the parameter first-PDCCH-MonitoringOccasionOfPO is signaled in the corresponding BWP configuration.

5G-S-TMSI (Temporary Mobile Subscriber Identity) is a 48 bit long bit string as defined in 3GPP TS 23.501: "System Architecture for the 5G System; Stage 2" V15.6.0. 5G-S-TMSI shall in the formulae above be interpreted as a binary number where the left most bit represents the most significant bit.

If the UE has no 5G-S-TMSI, for instance when the UE has not yet registered onto the network, the UE shall use as default identity UE_ID = 0 in the PF and i_s formulas above.

In NR, the paging DCI is contained in a set of resources generally called CORESET (COnfiguration REsource SET). Thus, the UE needs to locate and received the paging CORESET in order to receive the paging message.

The paging CORESET can be transmitted in different OFMD symbols (hereafter symbols) within the slot. Its duration is fixed when the paging CORESET is configured. Thus, to indicate a UE the exact time-location of the paging CORESET to be monitored, an indication with resolution of symbols is required.

In 3GPP, NR-based operation in an unlicensed spectrum (NR-U) is studied (see e.g. 3GPP TR 38.889, Study on NR-based access to unlicensed spectrum, v16.0.0). NR-U may operate in a sub-7 GHz band at 5 GHz or 6 GHz. However, the present disclosure is not restricted to a particular band and may also be applied to a millimeter wave band at e.g. 52 GHz.

The Listen-Before-Talk (LBT) procedure is defined as a mechanism by which a device such as a base station or a user equipment (UE) applies a clear channel assessment (CCA) check before using the channel. The CCA utilizes at least energy detection to determine the presence or absence of other signals on a channel in order to determine if a channel is occupied or clear, respectively. European and Japanese regulations, for instance, mandate the usage of LBT in the unlicensed bands. Apart from regulatory requirements, this carrier sensing via LBT is one way for fair sharing of the unlicensed spectrum, and hence it is considered to be a vital feature for fair and friendly operation in the unlicensed spectrum in a single global solution framework.

The channel is considered occupied if the detected energy level exceeds a configured CCA threshold (e.g. for Europe, -73dBm/MHz, see ETSI 301 893, under clause 4.8.3), and conversely is considered to be free if the detected power level is below the configured CCA threshold. If the channel is classified as free, the device is allowed to transmit immediately. The maximum transmit duration is restricted in order to facilitate fair resource sharing with other devices operating on the same band.

In unlicensed band operation, after acquiring the channel by LBT, an initiating device (e.g. a scheduling device such as an NR gNB or LTE eNB) can occupy the channel up to a maximum channel occupancy time (COT). For instance, depending on the LBT requirement, a maximum COT may be assumed to be 8 ms or 9 ms. E.g., for a subcarrier spacing of 15 kHz, a COT of 8 ms corresponds to 8 slots, and for a subcarrier spacing of 30 kHz, it corresponds to 16 slots.

The initiating device (e.g. gNB) may share the acquired time-frequency resources with responding devices (e.g. one or more transceiver devices such as UEs). Sharing the acquired time-frequency resources may facilitate allowing flexible resource usage among uplink (UL) and downlink (DL). For instance, DL and UL resources can be re-allocated based on the traffic demand in the respective directions.

When the above-described paging configuration of 3GPP NR Rel-15 is applied in unlicensed operation, since time instances for paging (or "paging time instances") are configured semi-statically and since the availability of resources is subject to an outcome of LBT, the gNB has no or limited control whether those semi-statically configured resources would be available or not.

Consequently, it may not be possible for the UE to be paged on time because the available resources may be insufficient as they may not match the configured resources.

To compensate for the uncertainty due to LBT, the UE may be configured to monitor more paging time instances. However, this may increase the UE's power consumption associated with the additional monitoring unnecessarily. For instance, the additional paging time instances might be blocked due to LBT failure. Also, there may be no need for paging the UE.

The present disclosure provides techniques for configuration and validation of paging resources for unlicensed operation such as NR-unlicensed.

In this disclosure, UEs and scheduling nodes such as base stations and corresponding methods are described for the new radio access technology envisioned for the 5G mobile communication systems such as 3GPP NR, but which may also be used in LTE mobile communication systems.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology.

A communication device such as a UE and a scheduling node may comprise a transceiver and circuitry such as processing circuitry. The transceiver in turn may comprise and/or function as a receiver and a transmitter. The processing circuitry may be one or more pieces of hardware such as one or more processors or any LSIs (Large Scale integration). Between the transceiver and the processing circuitry there is an input/output point (or node) over which the processing circuitry, when in operation, can control the transceiver, i.e. control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

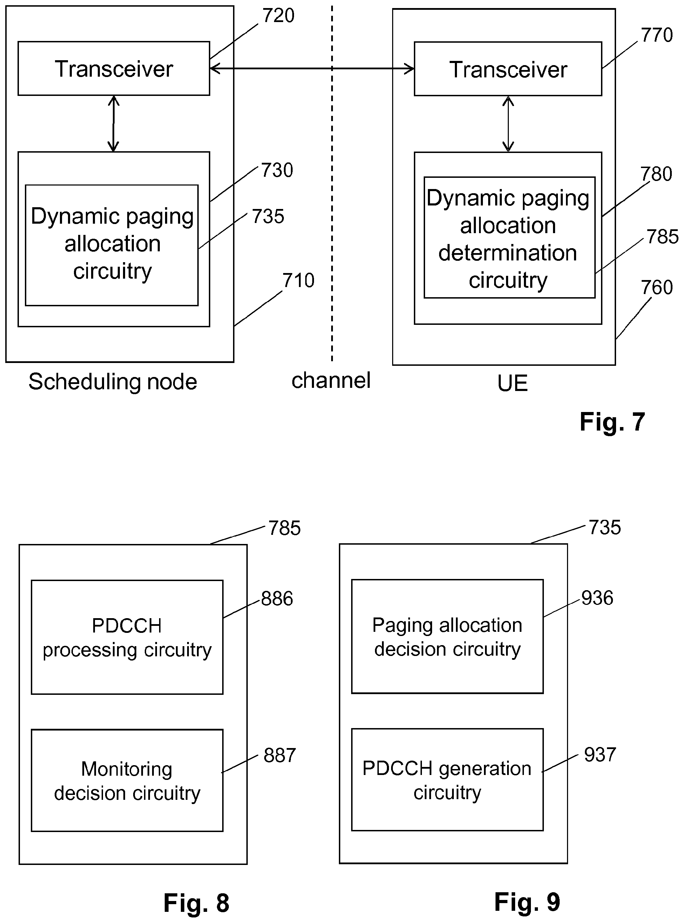

Provided are a user equipment (UE) 760 and a scheduling node 710, both of which are shown in **Fig. 7.**

The user equipment 760 comprises a transceiver 770 and circuitry 780 (which will also be referred to as "UE transceiver" and "UE circuitry" in this application). The UE transceiver 770, in operation, receives at least one PDCCH from which allocation of a paging time instance to be monitored for a paging DCI is determinable. The UE circuitry 780, in operation, determines the allocation of the paging time instance to be monitored based on the received at least one PDCCH. The UE transceiver, in operation, performs monitoring for the paging DCI based on the result of the determination of the paging time instance.

The scheduling node 710 comprises a transceiver 720 (also referred to as "scheduling node transceiver") and circuitry 730 ("scheduling node circuitry"). The scheduling node circuitry 730, in operation, performs allocation of a paging time instance to be monitored by a user equipment, UE, for paging downlink control information, DCI, and generates at least one physical downlink control channel, PDCCH, from which the allocation of the paging time instance to be monitored is determinable. The transceiver, in operation, transmits the at least one PDCCH, and performs transmission of the paging DCI based on the received at least one PDCCH.

Base stations such as eNB or gNB are examples of scheduling nodes according to the present disclosure.

As is shown in **Fig. 7**, UE and scheduling node perform communication over channel such as a wireless channel of a communication system such as NR, LTE, or similar radio communication systems.

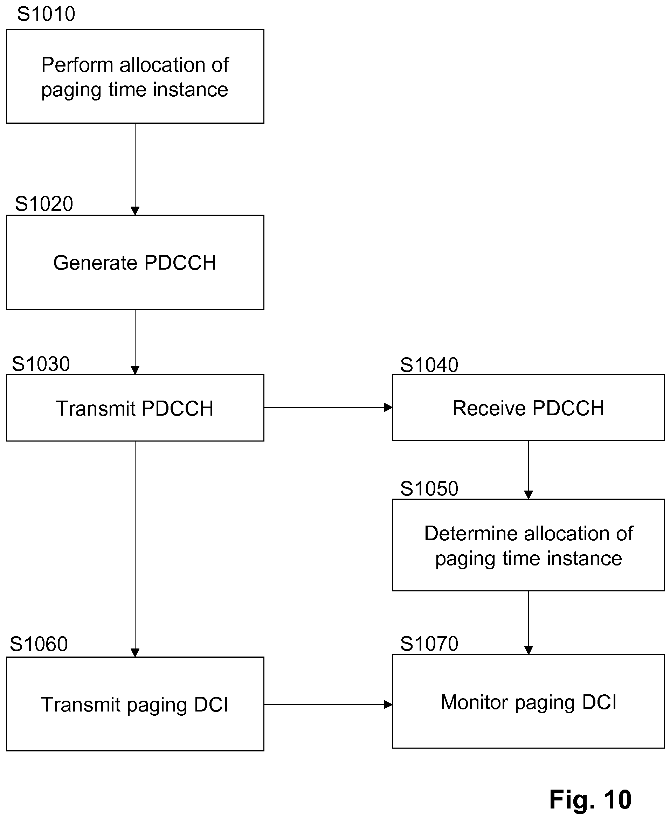

As further shown in **Fig. 7**, the UE circuitry may for instance comprise dynamic paging allocation determination circuitry 785, and the scheduling node circuitry 730 may comprise dynamic paging allocation circuitry 735. Exemplary dynamic paging allocation circuitry 735 of a scheduling node is shown in **Fig. 8**, comprising paging allocation decision circuitry 836 and PDCCH generation circuitry 837. Exemplary PDCCH dynamic paging allocation determination circuitry 785 shown in Fig. 10 comprises PDCCH processing circuitry 886 and monitoring decision circuitry 887.

In correspondence with the UE 760 and the base station 710, provided are respective paging methods to be performed by a user equipment and a base station, which are shown in **Fig. 10.**

The paging method for the scheduling node comprises a step S1010 of performing allocation of a paging time instance to be monitored by a user equipment, UE, for paging downlink control information, DCI and a step S1020 of generating at least one physical downlink control channel, PDCCH, from which the allocation of the paging time instance to be monitored is determinable. In step S1030, the scheduling node transmits transmitting the at least one PDCCH. Correspondingly, the paging method for a UE (or "UE paging method") includes a step S1040 of receiving the at least one PDCCH from which allocation of a paging time instance to be monitored for paging downlink control information, DCI, is determinable. Moreover, the UE paging method includes a step S1050 of determining the allocation of the paging time instance to be monitored based on the received at least one PDCCH. The paging method for the scheduling node includes, step S1060, performing transmission of the paging DCI in accordance with the allocation of the paging time instance, and correspondingly, the UE paging method, step S1070, includes performing monitoring for the paging DCI based on the determination of the allocation of the paging time instance.

The "paging DCI" is transmitted/received via a paging PDCCH. Accordingly, the UE monitors the paging PDCCH for the paging DCI. The Paging DCI may contains scheduling information for a paging message (which is transmitted via a PDSCH channel) typically. If paging message is sufficiently short, the paging DCI itself may contain the paging message. In such case, no scheduling information in the paging DCI needs to be provided.

On the other hand, the above-mentioned "at least one PDCCH", which may be called "allocation determination PDCCH" for determining allocation of the paging time instance to be monitored is a PDCCH different from the paging PDCCH. The at least one PDCCH includes scheduling information based on which time instances for monitoring the paging PDCCH become known to the UE. Examples for the at least one PDCCH for determining allocation of the paging time instance or instances will be provided in this disclosure.

In this disclosure, performing allocation of a paging time instance to be monitored includes deciding whether or not one or more UEs are to be paged and whether or not a paging DCI will be allocated to a paging time instance. Moreover, "determining the allocation of the paging time instance" includes determining whether or not the paging DCI is allocated to any paging time instance. Consequently "performing transmission in accordance with the allocation of the paging time instance" and "performing reception based on the determination of the allocation of the paging time instance" include transmitting and omitting the transmission and, respectively, the monitoring of the paging PDCCH.

The term "paging time instance" which comprises a resource or resources in time domain which are configured or scheduled to be monitored by one or more UEs for a paging PDCCH carrying a paging DCI. For instance, the allocation determination PDCCH may indicate one or more symbols within a slot or one or more symbols respectively within a plurality of slots, wherein the slot or slots may for instance be comprised by a channel occupancy time (COT) of the scheduling node. For instance, a paging time instance corresponds to a paging occasion (PO) within a paging frame (PF) or a paging PDCCH monitoring occasion within a PO comprising one or more symbols. A paging time instance may also be referred to as "paging monitoring occasion", "paging PDCCH monitoring occasion", or "paging DCI monitoring occasion".

According to the present disclosure, by transmitting at least one PDCCH from which the paging time instance is determinable, the paging time instance or time instances for paging and for monitoring the paging PDCCH are dynamically allocated.

For instance, the scheduling node and the UE communicate with each other in unlicensed operation, transmitting and receiving within a channel occupancy time COT acquired by the scheduling node by LBT. The scheduling node 710 operating on an unlicensed frequency, which may include, e.g. an unlicensed wideband carrier or a subband, e.g. of width 20 MHz, of an unlicensed wideband carrier, may perform a LBT operation, acquire a channel occupancy time based on a result of the LBT operation, and allocate the paging time instance to be monitored for the paging DCI to resources within the COT. Once a scheduling node 710 such as gNB, starts the COT, it may dynamically allocate the time instances for paging and for monitoring a paging PDCCH for the paging DCI.

Accordingly, by enabling dynamic allocation, the techniques of the present disclosure may facilitate fully utilizing the COT to accommodate more channels signals with respect to semi-satically allocating the time instances. For instance, resources which would otherwise be semi-statically assigned to paging time instances may be used for different signals or channels. Furthermore, a separate LBT procedure and a COT used only for paging may be avoided. In addition, dynamic allocation may facilitate control for resource utilization by the scheduling node or gNB. On the UE side, the dynamic allocation in accordance with this disclosure may facilitate saving UE power by not monitoring for paging unnecessarily, e.g. by providing more precise information on allocation of paging time instances to the UE.

As will be shown by some embodiments to be described in more detail, dynamic allocation according to the present disclosure includes, firstly, indication of new time instances, "new" meaning that the paging time instance or instances have not been configured, e.g. semi-statically, and, secondly, enabling or disabling of semi-statically configured time instances that have been configured before acquiring of the COT by the base station. Further, indication of new time instances and enabling or disabling of configured time instances may be combined.

The at least one PDCCH for determining allocation of a paging time instance (or instances) may carry at least one of:

- a channel occupancy time, COT, structure indication indicating such as an allocation of downlink symbols and non-downlink symbols for a COT of a scheduling node serving the user equipment in unlicensed operation. E.g., the COT structure indication includes, for each symbol within one or more slots included by the COT, an indication whether the symbol is a downlink symbol (D or DL), an uplink symbol (U or UL), or a Flexible symbol usable both for uplink and downlink (F), the eventual use of a Flexible symbol depending on the actual scheduling.
- a paging indication indicating whether or not the paging time instance is to be monitored for a paging DCI. For instance, for a given number of time instances such as symbols, a bitmap indicates for each of the time instance whether it is to be monitored as a paging time instance or not.

In the former case of an allocation of downlink and non-downlink symbols, the UE circuitry, for instance, determines at least one allocated downlink symbol indicated by the COT structure indication to be the paging time instance to be monitored.

E.g. an idle UE in RRC_IDLE and RRC_INACTIVE receiving a COT structure indication interprets an indication of a symbol as "downlink" as a paging time instance to be monitored, and interprets an indication of a symbol as "uplink" or "Flexible" as a symbol which is not to be monitored for paging.

It should be noted that the indication of downlink or non-downlink symbols may be different for different UEs, for instance UEs on different beams, to facilitate the spatial reuse. As an example, for the same set of symbols, the indication could be "downlink" for one group of UEs in one beam direction but "non-downlink" for another group of UEs in another beam direction. Alternative to, or in combination to separating different UE groups by beam direction, the separation can be done by different RNTIs (Radio Network Temporary Identifiers). More specifically, by configuring a different RNTI to UEs for CRC (Cyclic Redundancy Check) (de)scrambling of the PDCCH carrying COT structure indication, UEs are separated into different groups. The number of UEs within each group can be controlled by gNB via assigning the same RNTI for the group of UEs.

For instance, if a given symbol is semi-statically configured as a possible paging monitoring occasion and the COT structure indication indicates the symbol as "downlink", the UE will determine the symbol to be a paging time instance to be monitored. On the other hand, the UE will then determine not to monitor a symbol previously configured as paging monitoring occasion if the COT structure indication indicates this symbol as non-downlink, e.g. uplink or Flexible. Alternatively, if there is no configuration of paging monitoring occasions and the COT structure indication indicates "new" paging time instances, a UE will determine each symbol indicated as "downlink" to be a paging occasion to be monitored, and each symbol not indicated as downlink (uplink or Flexible) not to be a paging time instance to be monitored.

Furthermore, the at least one PDCCH may carry both a COT structure indication and a paging indication. Therein, the COT structure indication and the paging indication may be included in the same PDCCH, or in respectively different PDCCHs, or in the same PDCCH but with a different CRC scrambling RNTI. In case both COT structure indication and paging indication are used to determine the paging time instances to be monitored. Indicated or enabled paging time instances (e.g. time instances represented as "downlink" in the COT structure) may further need to be validated by the paging indication.

*Disabling or enabling configured paging time instances*

In some embodiments, the paging time instance is configured semi-statically via RRC signaling, and the at least one PDCCH indicates enabling or disabling the configured paging time instance.

For instance, a configuration from RRC signaling indicates a plurality of paging occasions, and the allocation determination PDCCH (or PDCCHs) informs the UE which of these paging occasions are enabled and thus should be monitored or disabled and thus should not be monitored. Whether the allocation determination PDCCH determines enabling or disabling may depend on whether a configured paging occasion is assumed, by default, by standard or by configuration to be invalid (not to be monitored without contrary indication in dynamic signaling) or valid (to be monitored without contrary indication in dynamic signaling).

In some embodiments where the paging time instance is configured via RRC signaling, it is determined that the paging DCI is allocated to the configured paging time instance unless the at least one PDCCH indicates that allocation of the paging DCI to the configured paging time instance is disabled. The UE receives a configuration of the paging time instance or instances semi-statically by RRC, which are considered valid without additional enabling step. It should be noted that the above-mentioned determination is to regulate UE's behavior of paging PDCCH monitoring. A gNB can still have the freedom to decide whether to actually page the UE or not. In other words, the above determination from UE side guarantees that UE can be paged as long as there is a need from the scheduling node, e.g. gNB, side.

Accordingly, without disabling by the allocation determination PDCCH, the UE monitors a configured paging time instance. Therein, like in the above-described semi-statically signaling of the paging configuration according to NR-Rel. 15, the UE may be configured with the paging frame and the paging occasion with respect to SFN/slot index, or the start of a transmission window for an SSB or SS/PBCH block (synchronization signal block carrying primary and secondary synchronization signal (PSS/SSS) and Physical Broadcast Channel (PBCH)).

As an option for disabling configured paging time instances by dynamic indication, the allocation determination PDCCH is a CO-PDCCH (channel occupancy PDCCH) which includes the COT structure allocation indicating the allocation of DL, UL, and flexible symbols for one or a more slots included by the COT acquired by the scheduling node, e.g. gNB serving the UE. The UE receives the CO-PDCCH which includes the allocation of DL, UL, and Flexible symbols for the one or more slots.

For instance, configured paging time instance is then determined to be disabled and thus not to be monitored by the UE if it is indicated as UL or Flexible symbol(s) by the CO-PDCCH.

Alternatively, in some embodiments, if the at least one PDCCH includes the COT structure indication and the RRC-configured paging time instance is allocated to a symbol subsequent to the at least one PDCCH within the COT, the UE determines that the configured paging time instance is disabled. For instance, if the UE receives a CO-PDCCH, all future paging time instances (paging time instances received later or subsequent in time to the symbols on which the CO-PDCCH is received, or the beginning of the first symbol in time of the CO-PDCCH) within the COT indicated by the CO PDCCH are disabled one the CO-PDCCH is received, regardless of the content of the CO-PDCCH. However, the UE may still be paged if it receives a paging PDCCH on a configured paging time instance preceding the CO-PDCCH in time.

As another option for signaling disabling of configured paging occasions, the UE may receive a paging indication indicating whether or not the configured paging time instance is to be monitored, rather than indicating the disabling by the COT structure. For instance, a COT may include a given number N of paging time instances or N paging time instances per beam. The paging indication may be a bitmap including N bits, as disclosed above, indicating for each of the N configured paging time instance whether it is to be monitored as a paging time instance or not. As mentioned, the paging indication such as the bitmap may be transmitted inside the CO-PDCCH, or in a separate PDCCH, or same PDCCH but CRC scrambled by a separate RNTI.

It should be noted that in multi-beam operation, after some configured paging time instance has been disabled, the UE needs to know to which beam a remaining time instance corresponds. For instance, the UE may know which remaining paging time instance belongs to which beam based on a known pattern, a configured or defined association between symbols and beams. The known pattern may be configured when the paging time instances are configured.

As a concrete example, two paging time instances are configured to be located at symbols #0 and #7 respectively, for each slot from slots #0 to #3 (totally four slots) within a PF. Overall there would be $2 \times 4 = 8$ paging time instances within the PF. Additionally, from system broadcast information, e.g. SIB1, UE knows that gNB is transmitting a number $S$ of beams. Then the UE can derive the corresponding beam for each paging time instance using a modulo operation such as $beam\_i = \mod(i, S)$, where $beam\_i$ is the index of corresponding beam of the $i$-th paging time instance, $i$ is the index of the configured paging time instances (in the example, $i=0,1,...7$).

Accordingly, a UE may not need to monitor paging time instances corresponding to different beams than the beam received by the UE although they have not been disabled.

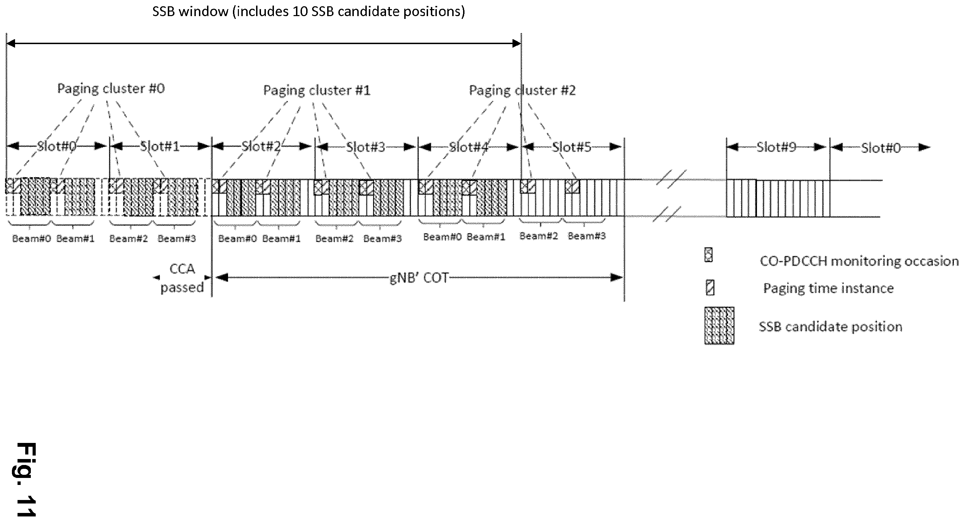

A use case example of disabling semi-statically configured paging time instances is shown in **Fig. 11,** where the paging shares a same COT with the SSB.

According to an SSB window configuration for the example of Fig. 11, the SSB window starts at slot#0 in a radio frame with radio frame index (SFN mod 40) = 0. The SSB window spans from slot#0 to slot#4, containing 10 SSB candidate positions (two candidate positions of respectively four symbols per slot).

Further, an exemplary configuration of paging time instances is shown which starts, same as the SSB window, at slot#0 of the frame with frame index (SFN mod 40) = 0. The paging time instances configuration spans over 6 slots and contains a total of 12 configured time instances for paging.

In Fig. 11, the paging time instances are grouped into 3 paging clusters, each paging cluster covering all transmitted beams (four beams in this example). A "paging cluster" is a pattern of paging time instances possibly associated with a plurality of beams, which may span over one or more slots (e.g. two slots as in Fig. 11). For example, as shown in Fig. 11, one paging cluster comprises, for each transmitted beam, a respective paging time instance. Accordingly, by indicating disabling a paging cluster, one paging time instance per beam is disabled. Regarding the relationship between paging cluster and Paging Occasion (PO), the paging cluster could be a sub-set of the PO. For example, in Fig.11, one PO could be defined to include all three paging clusters, to allow beam repetition (multiple paging time instances for each beam) within a PO. In some other cases, it might be convenient to define one PO to include each beam only once. In such case, one paging cluster is equivalent to one PO.

A gNB wins LBT and acquires a COT spanning over four slots, starting in slot#2. Without further indication, all configured paging time instances or paging PDCCH monitoring occasions are taken to be valid.

Now, as a first alternative, to disable the configured paging time instances in these slots, a CO-PDCCH including a COT structure indication may be used indicating non-DL symbols. E.g., to disable the configured paging time instances in slot#2 and slot#3, CO-PDCCH in slot#2 indicates "DUDDDDDUDDDDDD; DUDDDDDUDDDDDD" for slot#2 and slot#3. Accordingly, the second symbol (symbol #1) and the ninth symbol (symbol #8) of these slots are disabled by the indication as uplink. It should be noted that the UL, DL, or Flexible indication for the remaining symbols (in this example, "uplink" for all symbols) is not relevant for the paging indication since these symbols are not configured to carry paging time instances. Accordingly, in this and other examples of COT structure indications of this disclosure, the COT structures may be replaced by structures with values not corresponding to configured paging time instances being different.

As a second alternative, a paging indication may indicate disabling paging clusters or paging time instances. E.g., the paging indication may include a bitmap where each bit corresponds to one cluster of paging instances. E.g. a paging indication in slot#2 indicates a bitmap of "00" to disable paging cluster #1 and paging cluster #2 (slots#2 to slot#5). Accordingly, the number of bits of the bitmap may correspond to the number of paging clusters included in the COT.

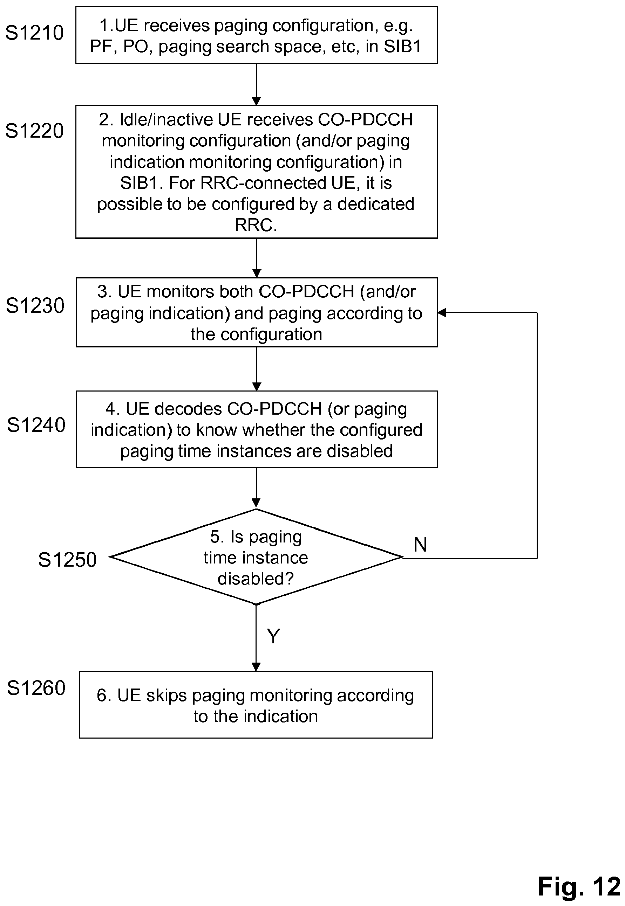

An exemplary flow chart of method steps to be performed by a UE according to embodiments where the CO-PDCCH indicates disabling of paging time instances is shown in **Fig. 12**. In step 1210, 1.UE receives paging configuration, e.g. PF, PO, paging search space, etc., in SIB1, and thus is enabled to determine the RRC-configured paging time instance(s). The UE assumes that resources for paging, e.g. the configured paging time instances are enabled. In step 1220, an idle or inactive UE receives a CO-PDCCH monitoring configuration (and/or paging indication monitoring configuration) in SIB1. For RRC-connected UE, it is possible to be configured by a dedicated RRC. In step 1230, UE monitors both CO-PDCCH (and/or paging indication) and paging according to the configuration. In step 1240, UE decodes CO-PDCCH (or paging indication) to know whether the configured paging time instances are disabled and, in accordance with the decoding, determines whether the configured paging time instances are to be monitored in step S1250: If a paging time instance is not disabled, the UE returns to step 1230 to monitor paging (e.g. monitor the paging time instance for a paging DCI) and it a paging time instance is disabled, step S1260, the UE skips paging monitoring of the disabled paging time instance according to the indication.

It has been described above how one or more configured paging time instances may be dynamically by an allocation determination PDCCH in some embodiments.

Moreover, this disclosure provides embodiments where the paging time instance is configured via RRC signaling, and the paging DCI is determined to be allocated to the RRC-configured paging time instance if the at least one PDCCH indicates that allocation of the paging DCI to the configured paging time instance is enabled.

In particular, the paging DCI is determined to be allocated to the RRC-configured paging time instance only if the at least one PDCCH indicates that allocation of the paging DCI to the configured paging time instance is enabled. Else, if the at least one PDCCH does not indicate that allocation of the paging DCI to the configured paging time instance is enabled the paging DCI is assumed or determined not to be allocated to the configured paging time instance.

In this case, the UE still semi-statically receives a configuration of a paging time instance by RRC (with respect to SFN/slot index or SSB transmission window, as mentioned above). However, these configured time instances are not valid and thus not to be used for monitoring the paging PDCCH without an enabling step by dynamic allocation.

As a first alternative for signaling enabling, the UE receives a CO-PDCCH including a COT structure indication which includes an allocation of DL, UL, and Flexible symbols for one or more slots. A paging time instance is then considered to be enabled for monitoring a paging PDCCH if the paging time instance is indicated as DL symbol(s) by the CO-PDCCH, otherwise it is not valid, and monitoring of the invalid paging time instance is not to be performed by the UE.

As a second alternative for signaling enabling, the UE receives a paging indication which indicates whether or not a configured paging time instance is to be enabled or which paging time instances among preconfigured paging time instances are enabled. The paging indication can be a bitmap indication, similar to the paging indication used in the above-described embodiments where the configured paging time instances are dynamically disabled via PDCCH. Further, again, the paging indication may be transmitted inside a CO-PDCCH, or in a separate PDCCH, or the same PDCCH but CRC scrambled by a separate RNTI.

Due to dynamically enabling paging time instances, the UE does not need to monitor paging unless explicitly indicated to do so. This may facilitate, for instance, saving UE power.

In multi-beam operation, the UE needs to know, when some time instance is enabled, which beam corresponds to which time instance. Like in the embodiments using dynamically disabling, the correspondence of beams to time instances may be known based on a known pattern, as described above. Accordingly, a UE may not need to monitor paging time instances corresponding to different beams than the beam received by the UE although they have been enabled.

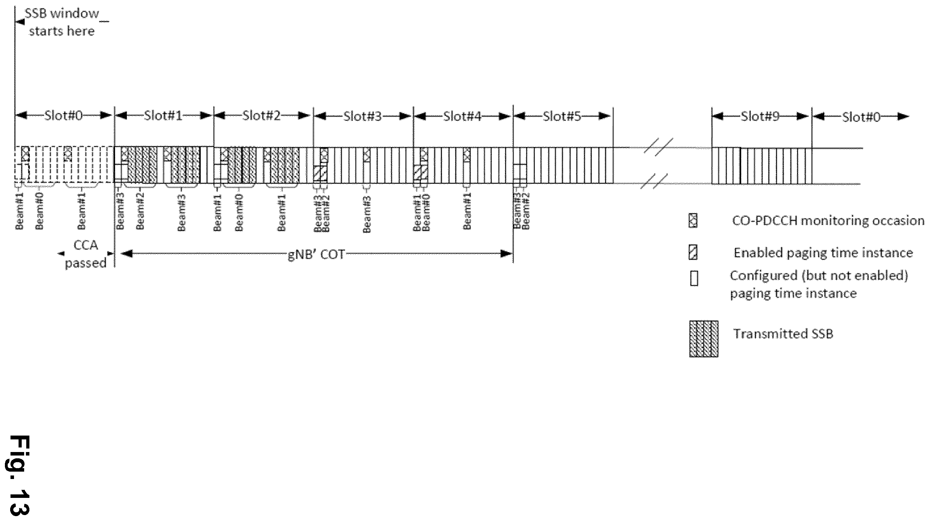

An example for dynamically enabling configured paging time instances is shown in Fig. 13. The figure shows a paging time instance configuration which in slot#0 of a frame with (SFN mod 40) = 0, which is the same slot as the starting slot of an SSB window.

The paging time instances configuration spans over 6 slot and contains a total of 12 configured paging time instances. Since four beams are transmitted, there are 3 configured paging time instances per beam. In the example of Fig. 13, no paging cluster is formed. However, in such a case, the configured paging time instances can be enabled individually.

As shown in Fig. 13, the gNB wins LBT and, at the beginning of slot#1, starts a COT of four slots. As can be seen, in this example, configured paging time instances are enabled in slot#3 and slot#4, whereas configured paging time instances are not enabled in slot #1 and slot#2.

Thus, an exemplary COT structure indication for both slot #1 and slot #2 may be "UUDDDDDUUDDDDD", and for both slot#3 and slot#4 "DDDDDDDDDDDDDD".

It should be noted that in above COT structures for slots #1 and #2, the respective second symbols of the slots are indicated as uplink although CO-PDCCH monitoring occasions are allocated to them. However, for such configurations where CO-PDCCH and paging monitoring are allocated to the same symbol, a UE may be configured, or it may be agreed by standard, to use the COT structure indication on this symbol to determine whether or not a paging PDCCH should be monitored, whereas, for the monitoring of a CO-PDCCH, the configuration of the CO-PDCCH shall overrule the any dynamic indication via PDCCH.

In order to enable the configured paging time instances at slots #3 and #4, but not at slots #1 and #2, a paging indication, e.g. a bitmaps with one bit corresponding to one slot, may be used as follows: In slot#1, a paging indication indicating "001" means that paging, and monitoring of a paging PDCCH, is not enabled in the current slot (slot#1) and the next slot (slot#2), but enabled in slot #3. Correspondingly, a paging indication transmitted in slot#2 indicates "011", to mean enabling paging in slots #3 and #4. Further, a paging indication received in slot#3 would indicate "110".

As can be seen from the above paging indication in slot#3, a paging indication may indicate one or more slots outside the gNB's channel occupancy time (slot#5 in this example). Accordingly, the number of bits of the bitmap need not vary depending on the distance between the slot in which the paging indication is received and the end of the COT. To avoid unnecessary monitoring of paging outside the COT, a bit referring to a slot outside the COT shall indicate "0" (corresponding to not enabling a paging time instance in this slot). Alternatively, another bit field inside paging indication or COT PDCCH can inform UE the end slot of the COT, such that UE knows where to stop monitoring any PDCCH.

Furthermore, the number of bits in the bitmaps in in this example is exemplary. However, the number of bits should be sufficient to cover all paging time instances in the same beam as the beam transmitting the paging indication which precede the next paging indication on the same beam.

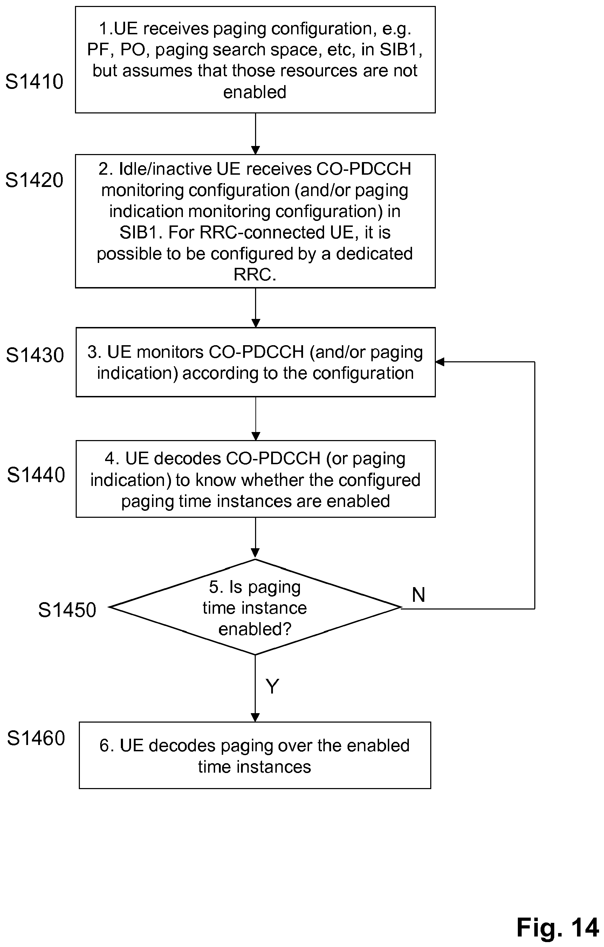

Exemplary method steps which may be performed by a UE in an embodiment where paging is dynamically enabled are shown in Fig. 14. In step S1410, a UE receives a paging configuration, e.g. PF, PO, paging search space, etc., in SIB1, and thus is enabled to determine the RRC-configured paging time instance(s). In contrast to step S1210 of Fig. 12, the UE assumes that those resources are not enabled. In step S1420, an idle/ inactive UE receives CO-PDCCH monitoring configuration (and/or paging indication monitoring configuration) in SIB1. For RRC-connected UE, it is possible to be configured by a dedicated RRC. In step S1430, the UE monitors CO-PDCCH (and/or paging indication) according to the configuration. In step S1440, the UE decodes CO-PDCCH (or paging indication) to know whether the configured paging time instances are enabled, and determines, step S1450 whether a given paging time instance out of the configured paging time instances is enabled. If yes, the UE decodes, step S1460 a paging PDCCH on the enabled paging time instances. If no, the UE returns to step S1430 and performs monitoring of further CO-PDCCH and/or paging indications.

In Fig. 11, a paging time instances configuration is shown where the paging time instances for the different beams are grouped into paging cluster, whereas in the configuration in Fig. 13 no paging clusters are formed. However, this choice of configurations is merely exemplary, and the embodiments of dynamically enabling and dynamically disabling paging are not limited to particular paging configurations. Accordingly, for instance, disabling via PDCCH may also be performed when no paging cluster is formed, and enabling may also be performed when paging clusters are formed.

Thus, in some embodiments, irrespective of whether enabling or disabling of configured paging time instance(s) is performed dynamically, the COT, includes a paging cluster or a plurality of paging clusters. Each of the paging clusters may include, for each of a plurality of beams swept by the scheduling node, respectively a configured paging time instance, and the at least one PDCCH indicates whether or not each of the plurality of paging clusters is enabled.

*Indicate new paging time instances*

In some embodiments, the COT structure indication included in a CO PDCCH specifies the allocation of paging time instances to be monitored by a UE.

Thus, rather than enabling or disabling configured paging time instances, a CO-PDCCH received by the UE and used by the scheduling node may include a specification of "new" paging time instances which have not yet been configured.

The UE may receive, as signaling for the indication of the specified downlink symbols, a CO-PDCCH which includes a COT structure indication including an allocation of downlink and non-downlink (uplink, and Flexible) symbols, similar to the above-described CO-PDCCHs used for enabling and disabling configures time instances.

The UE then interprets or determines downlink symbols indicated in the CO-PDCCH as paging time instances to be monitored.

However, for dynamically specifying paging time instances to be monitored, more than one level of indication can be used in one or more allocation determination PDCCHs.

The determination of the paging time instances based on the CO-PDCCH and the COT structure indication included therein may be a first level.

Optionally, as a second level of validation, the UE may monitor paging over the indicated DL symbols only if it receives a paging indication. As described in above embodiments, the paging indication may be received within the same CO-PDCCH or in a separate PDCCH.

The paging indication may be a bitmap similar to the above-described bitmaps, indicating for each of a plurality of paging time instances whether it is to be monitored or not, similar to the paging indication described above. However, the paging indication is used to validate dynamically specified rather than semi-statically configured paging time instances.

With the second level of validation, the scheduling node may use the indicated DL symbol for transmitting other DL signals and/or channels without the need to take into account wasting of UE power due to false paging monitoring. However, as the second level of validation is optional, the COT structure indication may also be used without a further validation via paging indication. In this case, the signaling overhead is reduced at the price of the increased UE power consumption.

In multi-beam operation, the UE needs to know, when a time instance is indicated or specified to be monitored, which beam corresponds to which time instance, and, based on this knowledge, may monitor only paging time instances which are on the beam which the UE receives. The UE may know the correspondence based on a configured beam sweeping pattern (e.g., inside the SSB window), or by dynamic indication or specification via PDCCH.

On the one hand, if the PDCCH content (e.g. the COT structure indication and/or paging indication) is "per beam", the indicated time instance will use the same beam as CO-PDCCH. E.g., the at least one PDCCH may be a beam-specific PDCCH transmitted on one beam out of a plurality of beams swept by the scheduling node, and the allocation of the at least one downlink symbol which the circuitry determines to be the paging time instance to be monitored may be beam-specific. For instance, symbols indicated as downlink or not downlink, or bits indicating validation of indicated downlink symbols, may differ among different beams.

On the other hand, if PDCCH content specifying the paging time instance(s) to be monitored is common for all beams, the starting beam for the first indicated paging time instance may be indicated. For instance, the at least one PDCCH may be common to a plurality of beams swept by the scheduling node and indicate a plurality of downlink symbols including, for each of the plurality of beams, a paging time instance to be monitored and a starting beam for which the paging time instance to be monitored is allocated to an first symbol in time out the plurality of beams. The UE may determine the paging time instance to be monitored on the corresponding beam, out of the plurality of respective paging time instances, based on a determined or configured circular order of beams beginning from the indicated starting beam.

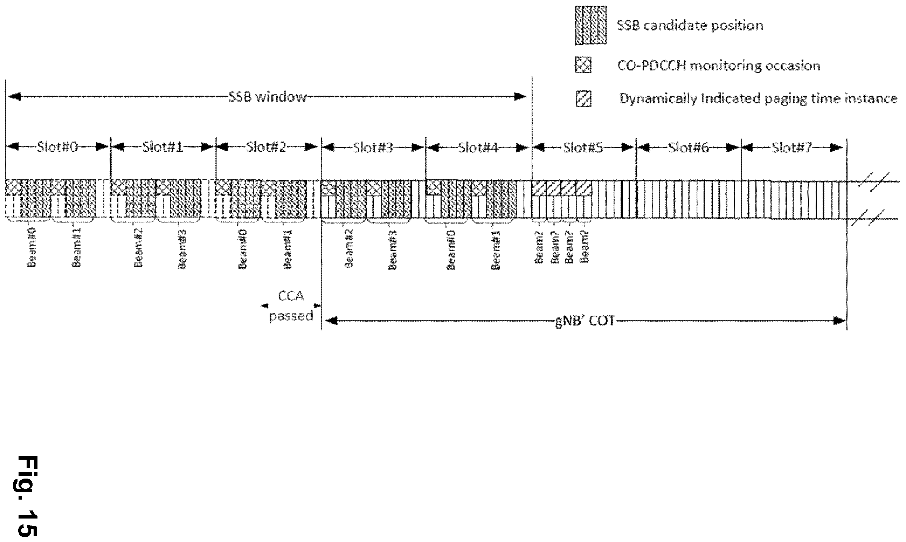

A use case example of an embodiment where the at least one allocation determination PDCCH specified paging time instances which have not previously been configured is shown in **Fig. 15.** In this example, the gNB wins LBT and starts a COT for five slots starting from slot#3.

Thus, the COT partially overlaps with the SSB window starting at the beginning of slot#0. Within the SSB window, beam sweeping has a configured pattern (as shown). However, outside such window, beam sweeping pattern may need to be indicated.

In the above-described case of common PDCCH content for all beams, the CO-PDCCH in slot#3 or/and slot#4 can indicate paging time instances for slot#5, such as "DDDDDDDDFFFFFF". Note that from paging control resource set (CORESET) configuration, UE may know that one paging monitoring instance consists of two symbols. Therefore, by receiving an indication of 8 DL symbols, UE can know it contains 4 paging monitoring time instances. Furthermore, the starting beam may be indicated via PDCCH, and beams may be swept according to a determined pattern e.g. a pattern known from a standard or being semi-statically configures. E.g., "01" may be indicated to start with beam #1 on the first and second symbols of the slot indicated by the above COT structure indication as downlink. slot#5 in this example, and the beams may be swept in accordance with a known order, e.g.: Beams #1 -> beam #2 -> beam #3 -> beam #0.

If the allocation determination PDCCH is beam specific, the CO-PDCCH in slot#3 over beam#2 (a CO-PDCCH transmitted on one or both of the first two symbols of the slot), may indicate, for slot #5, "FFDDFFFFFFFFFF" to mean that the UE served over beam #2 may monitor paging over the 3rd and 4th symbols in slot#5 corresponding to beam#2.

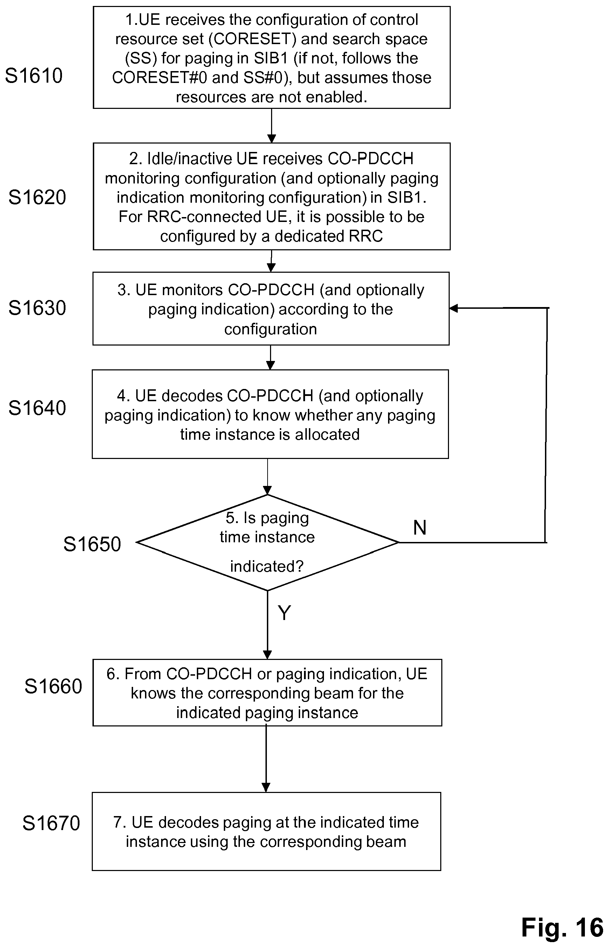

Exemplary method steps for a UE receiving a PDCCH dynamically specifying new/unconfigured paging time instances is shown in **Fig. 16.** In step S1610, the UE receives the configuration of control resource set (CORESET) and search space (SS) for paging in SIB1 (if not, follows the CORESET#0 (initial CORESET) and SS#0), but assumes those resources and search space are not enabled. In step S1620, the idle or inactive UE receives a CO-PDCCH monitoring configuration (and optionally paging indication monitoring configuration) in SIB1. For RRC-connected UE, it is possible to be configured by a dedicated RRC. In step S1630, the UE monitors CO-PDCCH (and optionally paging indication) according to the configuration. The UE then in step S1640 decodes CO-PDCCH (and optionally paging indication) to know S1650 whether any paging time instance is allocated. If no paging time instance is indicated to be allocated, the UE continues with step S1630 to monitor subsequent CO-PDCCHs and, optionally, paging indications. If an allocated paging time instance is determined in step S1650 to be indicated, the UE ay further know, from the CO-PDCCH or PDCCH including the paging indication, the corresponding beam for the indicated paging instance. In step S1670, the UE decodes paging at the indicated time instance using the corresponding beam.

As has been described above, embodiments of present disclosure include signaling of a CO-PDCCH and of a paging indication as dynamic indications for monitoring paging.

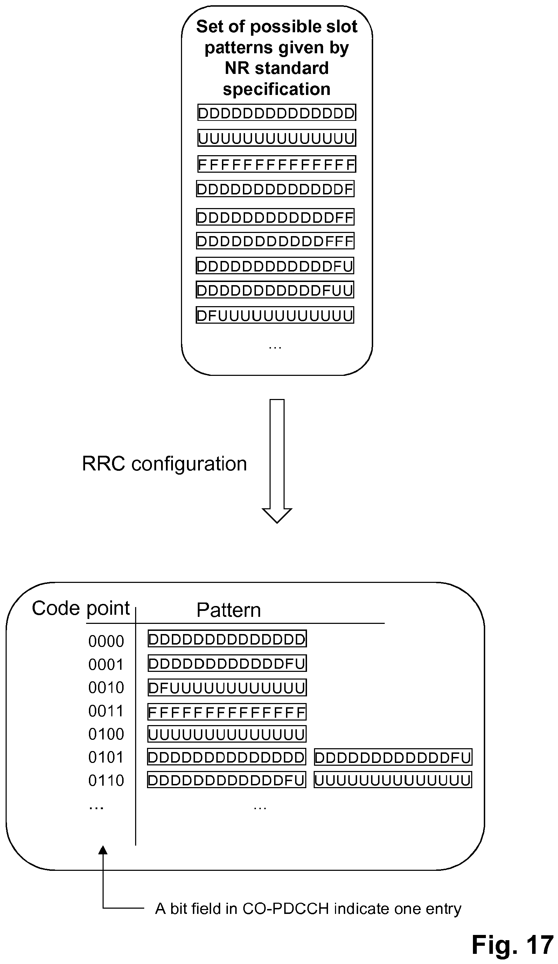

On the one hand, in the CO-PDCCH, a bit field may indicate the COT structure including DL, UL, or Flexible symbols for one slot or more consecutive slots. The value of the bit-field may correspond to a code point representing a pattern of UL, DL, and flexible symbols in accordance with a semi-statically configured mapping of code points to configure slot patterns or structures selected out of a complete set of possible slot patterns given by NR standard specification (see **Fig. 17**).

If the bit field in the CO-PDCCH indicates a structure spanning over more than one consecutive slots, it may be updated in a partially overlapping manner. E.g., a bit field in a first slot indicates structures of a first slot and a second slot, and a bit field in the second slot indicates an updated structure of the second slot and a structure for a third slot in time order.

The configuration of the mapping of code points to slot patterns, may be transmitted in CORESET#0 for idle UEs. Moreover, the search space to be monitored for allocation determination PDCCH and/or the paging PDCCH may be the same as SS#0 or a different search space. Once entering a connected mode. One a UE enters RRC connected mode, a dedicated RRC may configure the UE with a new RNTI to monitor a different CO-PDCCH. Otherwise, if a new RNTI is not configured, connected UEs and idle/inactive UE monitor the same CO-PDCCH.

On the other hand, a paging indication, which may be transmitted in the CO-PDCCH or in a separate PDCCH, indicates whether UE will be paged in the upcoming paging time instance using a flag bit. One bit can indicate one PO, or one cluster inside a PO (as described with respect to Fig. 11), one PO or one paging time instance (such as described with respect to Figures 13). Moreover, for instance in the above-described case of a common determination allocation PDCCH content for all beams, the indication may additionally or alternatively indicate a starting beam on which the first paging time instances among the indicated paging time instances are to be monitored.

Furthermore, it should be mentioned that the different paging allocation examples shown in Figures 11, 13, and 15, are applicable to each of the different above-described embodiments including enabling or disabling configured paging time instances, and dynamically specifying new paging time instances. For instance, the allocation of paging time instances outside the SSB window of Fig. 15 may be applied if paging time instances are configured semi-statically and enabled/disabled dynamically, and paging clusters shown in Fig. 11 are applicable to the case of dynamically specifying new paging time instances.

Furthermore, it should be noted that the present disclosure addresses time-domain allocation of paging time instances comprising symbols to which a paging PDCCH is possibly allocated. Regarding the frequency domain, resources are configured, e.g. in accordance with steps S1210, S1410, and S1610 of Figures 12, 14, 16 where the CORESET or search space configuration is configured.

Moreover, similar to step 1610 of Figure 16, reception of a CORESET configuration is also received in the embodiments where configured paging time instances are enabled or disabled. On the other hand, in the embodiments where new unconfigured paging time instances are indicated or specified dynamically, parameters such as PF and PO, which are received in steps S1210 of Fig. 12 and S1410 of Fig. 14, are not needed for the determination the paging time instances are to be monitored.

Moreover, although the examples provided in Figures 11, 13, and 15 show a COT beginning respectively with the first symbol in time of a slot, the disclosure is also applicable to COTs beginning on a symbol different from starting symbol of a slot. Furthermore, the disclosure is applicable for slot-based assignment, as shown or non-slot based assignment where a TTI corresponds to a unit including less symbols than a slot, e.g. "mini-slots".

The present disclosure can be realized by software, hardware, or software in cooperation with hardware. Each functional block used in the description of each embodiment described above can be partly or entirely realized by an LSI (Large Scale Integration) such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Provided is a user equipment, UE, comprising a transceiver which, in operation, receives at least one physical downlink control channel, PDCCH from which allocation of a paging time instance to be monitored for paging downlink control information, DCI, is determinable, and circuitry which, in operation, determines the allocation of the paging time instance to be monitored based on the received at least one PDCCH, wherein the transceiver, in operation, performs monitoring for the paging DCI based on the determination of the allocation of the paging time instance.

For instance, the UE operates on an unlicensed frequency.

For example, the at least one PDCCH includes at least one of a channel occupancy time, COT, structure indication indicating an allocation of downlink symbols and non-downlink symbols for a COT of a scheduling node serving the user equipment in unlicensed operation and a paging indication indicating whether or not the paging time instance is to be monitored.

For instance, the circuitry, in operation, determines at least one allocated downlink symbol indicated by the COT structure indication to be the paging time instance to be monitored.

In some embodiments, the paging time instance is configured via RRC signaling, and the at least one PDCCH indicates enabling or disabling the configured paging time instance.

In some embodiments, the circuitry, in operation, determines that the paging DCI is allocated to the configured paging time instance unless the at least one PDCCH indicates that allocation of the paging DCI to the configured paging time instance is disabled.

For instance, if the at least one PDCCH includes the COT structure indication and the configured paging time instance is allocated to a symbol subsequent to the at least one PDCCH within the COT, the circuitry, in operation, determines that the configured paging time instance is disabled.

In some embodiments, the circuitry, in operation, determines that the paging DCI is allocated to the configured paging time instance if the at least one PDCCH indicates that allocation of the paging DCI to the configured paging time instance is enabled.

In some embodiments, the COT includes a plurality of paging clusters each of which includes, for each of a plurality of beams swept by the scheduling node, a configured respective paging time instance, and the at least one PDCCH indicates whether or not each of the plurality of paging clusters is enabled.

In some embodiments, the COT structure indication specifies the allocation of the paging time instance to be monitored.

In some embodiments, the at least one PDCCH is a beam-specific PDCCH transmitted on one beam out of a plurality of beams swept by the scheduling node, and the allocation of the at least one downlink symbol which the circuitry determines to be the paging time instance to be monitored is beam-specific.

For example, the at least one PDCCH is common to a plurality of beams swept by the scheduling node and indicates a plurality of downlink symbols including, for each of the plurality of beams, a respective paging time instance to be monitored and a starting beam for which the paging time instance to be monitored is allocated to an first symbol in time out the plurality of beams, and the circuitry, in operation, determines the paging time instance to be monitored based on a configured circular order of beams beginning from the indicated starting beam.

Also provided is a scheduling node, comprising circuitry which, in operation, performs allocation of a paging time instance to be monitored by a user equipment, UE, for paging downlink control information, DCI, and generates at least one physical downlink control channel, PDCCH, from which the allocation of the paging time instance to be monitored is determinable, and a transceiver which, in operation, transmits the at least one PDCCH and performs transmission of the paging DCI in accordance with the allocation of the paging time instance.

For instance, the scheduling node operates on an unlicensed frequency, the transceiver, in operation, performs a listen before talk, LBT, operation, and the circuitry, in operation acquires a channel occupancy time based on a result of the LBT operation, and allocates the paging time instance to be monitored for the paging DCI to resources within the COT.

For example, the at least one PDCCH includes at least one of a channel occupancy time, COT, structure indication indicating an allocation of downlink symbols and non-downlink symbols for a COT of a scheduling node serving the user equipment in unlicensed operation and a paging indication indicating whether or not the paging time instance is to be monitored.

For instance, at least one allocated downlink symbol is indicated by the COT structure indication to be determined as the paging time instance to be monitored.

In some embodiments, the paging time instance is configured via RRC signaling, and the at least one PDCCH indicates enabling or disabling the configured paging time instance.

In some embodiments, the paging DCI is allocated to the configured paging time instance unless the at least one PDCCH indicates that allocation of the paging DCI to the configured paging time instance is disabled.

For example, if the at least one PDCCH includes the COT structure indication and the configured paging time instance is allocated to a symbol subsequent to the at least one PDCCH within the COT, the configured paging time instance is indicated to be disabled.

In some embodiments, the paging DCI is allocated to the configured paging time instance if the at least one PDCCH indicates that allocation of the paging DCI to the configured paging time instance is enabled.

In some embodiments, the COT includes a plurality of paging clusters each of which includes, for each of a plurality of beams swept by the scheduling node, a configured respective paging time instance, and the at least one PDCCH indicates whether or not each of the plurality of paging clusters is enabled.

In some embodiments, the COT structure indication specifies the allocation of the paging time instance to be monitored.

In some embodiments, the at least one PDCCH is a beam-specific PDCCH transmitted on one beam out of a plurality of beams swept by the scheduling node, and the allocation of the at least one downlink symbol which the circuitry determines to be the paging time instance to be monitored is beam-specific.

For example, the at least one PDCCH is common to a plurality of beams swept by the scheduling node and indicates a plurality of downlink symbols including, for each of the plurality of beams, a respective paging time instance to be monitored and a starting beam for which the paging time instance to be monitored is allocated to an first symbol in time out the plurality of beams, and the circuitry, in operation, specifies the paging time instance to be monitored in accordance with a configured circular order of beams beginning from the indicated starting beam.

Further provided is a paging method to be performed by a user equipment, UE, comprising receiving at least one physical downlink control channel, PDCCH from which allocation of a paging time instance to be monitored for paging downlink control information, DCI, is determinable, determining the allocation of the paging time instance to be monitored based on the received at least one PDCCH, and performing monitoring for the paging DCI based on the determination of the allocation of the paging time instance.

For instance, the method is performed during operation on an unlicensed frequency.

For example, the at least one PDCCH includes at least one of a channel occupancy time, COT, structure indication indicating an allocation of downlink symbols and non-downlink symbols for a COT of a scheduling node serving the user equipment in unlicensed operation and a paging indication indicating whether or not the paging time instance is to be monitored.

For instance, at least one allocated downlink symbol indicated by the COT structure indication is determined to be the paging time instance to be monitored.

In some embodiments, the paging time instance is configured via RRC signaling, and the at least one PDCCH indicates enabling or disabling the configured paging time instance.

In some embodiments, it is determined that the paging DCI is allocated to the configured paging time instance unless the at least one PDCCH indicates that allocation of the paging DCI to the configured paging time instance is disabled.

For example, if the at least one PDCCH includes the COT structure indication and the configured paging time instance is allocated to a symbol subsequent to the at least one PDCCH within the COT, it is determined that the configured paging time instance is disabled.

In some embodiments, it is determined that the paging DCI is allocated to the configured paging time instance if the at least one PDCCH indicates that allocation of the paging DCI to the configured paging time instance is enabled.

In some embodiments, the COT includes a plurality of paging clusters each of which includes, for each of a plurality of beams swept by the scheduling node, a configured respective paging time instance, and the at least one PDCCH indicates whether or not each of the plurality of paging clusters is enabled.

In some embodiments, the COT structure indication specifies the allocation of the paging time instance to be monitored.

In some embodiments, the at least one PDCCH is a beam-specific PDCCH transmitted on one beam out of a plurality of beams swept by the scheduling node, and the allocation of the at least one downlink symbol which the circuitry determines to be the paging time instance to be monitored is beam-specific.

For example, the at least one PDCCH is common to a plurality of beams swept by the scheduling node and indicates a plurality of downlink symbols including, for each of the plurality of beams, a respective paging time instance to be monitored and a starting beam for which the paging time instance to be monitored is allocated to an first symbol in time out the plurality of beams, and the the paging time instance to be monitored is determined based on a configured circular order of beams beginning from the indicated starting beam.

Moreover, provided is a paging method to be performed by a scheduling node, comprising performing allocation of a paging time instance to be monitored by a user equipment, UE, for paging downlink control information, DCI, generating at least one physical downlink control channel, PDCCH, from which the allocation of the paging time instance to be monitored is determinable, and transmitting the at least one PDCCH; and performing transmission of the paging DCI in accordance with the allocation of the paging time instance.

For instance, the method is performed during operation on an unlicensed frequency, and includes performing a listen before talk, LBT, operation and acquiring a channel occupancy time based on a result of the LBT operation, and allocates the paging time instance to be monitored for the paging DCI to resources within the COT.

For example, the at least one PDCCH includes at least one of a channel occupancy time, COT, structure indication indicating an allocation of downlink symbols and non-downlink symbols for a COT of a scheduling node serving the user equipment in unlicensed operation and a paging indication indicating whether or not the paging time instance is to be monitored.

For instance, at least one allocated downlink symbol is indicated by the COT structure indication to be determined as the paging time instance to be monitored.

In some embodiments, the paging time instance is configured via RRC signaling, and the at least one PDCCH indicates enabling or disabling the configured paging time instance.

In some embodiments, the paging DCI is allocated to the configured paging time instance unless the at least one PDCCH indicates that allocation of the paging DCI to the configured paging time instance is disabled.

For example, if the at least one PDCCH includes the COT structure indication and the configured paging time instance is allocated to a symbol subsequent to the at least one PDCCH within the COT, the configured paging time instance is indicated to be disabled.

In some embodiments, the paging DCI is allocated to the configured paging time instance if the at least one PDCCH indicates that allocation of the paging DCI to the configured paging time instance is enabled.

In some embodiments, the COT includes a plurality of paging clusters each of which includes, for each of a plurality of beams swept by the scheduling node, a configured respective paging time instance, and the at least one PDCCH indicates whether or not each of the plurality of paging clusters is enabled.

In some embodiments, the COT structure indication specifies the allocation of the paging time instance to be monitored.

In some embodiments, the at least one PDCCH is a beam-specific PDCCH transmitted on one beam out of a plurality of beams swept by the scheduling node, and the allocation of the at least one downlink symbol which the circuitry determines to be the paging time instance to be monitored is beam-specific.

For example, the at least one PDCCH is common to a plurality of beams swept by the scheduling node and indicates a plurality of downlink symbols including, for each of the plurality of beams, a respective paging time instance to be monitored and a starting beam for which the paging time instance to be monitored is allocated to an first symbol in time out the plurality of beams, and the paging time instance to be monitored is specified in accordance with a configured circular order of beams beginning from the indicated starting beam.

Summarizing, provided are a user equipment (UE), a scheduling node, and respective paging methods for a UE and a scheduling node. The UE comprises a transceiver which, in operation, receives at least one physical downlink control channel, PDCCH from which allocation of a paging time instance to be monitored for paging downlink control information, DCI, is determinable, and circuitry which, in operation, determines the allocation of the paging time instance to be monitored based on the received at least one PDCCH, wherein the transceiver, in operation, performs monitoring for the paging DCI based on the determination of the allocation of the paging time instance.

## Claims

1. A user equipment, UE, comprising:

   a transceiver which, in operation, receives at least one physical downlink control channel, PDCCH from which allocation of a paging time instance to be monitored for paging downlink control information, DCI, is determinable; and
   circuitry which, in operation, determines the allocation of the paging time instance to be monitored based on the received at least one PDCCH, wherein
   the transceiver, in operation, performs monitoring for the paging DCI based on the determination of the allocation of the paging time instance.

2. The UE according to claim 1, wherein the at least one PDCCH includes at least one of:

   a channel occupancy time, COT, structure indication indicating an allocation of downlink symbols and non-downlink symbols for a COT of a scheduling node serving the user equipment in unlicensed operation, and
   a paging indication indicating whether or not the paging time instance is to be monitored.

3. The UE according to claim 2, wherein the circuitry, in operation, determines at least one allocated downlink symbol indicated by the COT structure indication to be the paging time instance to be monitored.

4. The UE according to claim 2 or 3, wherein the paging time instance is configured via RRC signaling, and the at least one PDCCH indicates enabling or disabling the configured paging time instance.

5. The UE according to claim 4, wherein the circuitry, in operation, determines that the paging DCI is allocated to the configured paging time instance unless the at least one PDCCH indicates that allocation of the paging DCI to the configured paging time instance is disabled.

6. The UE according to claim 5, wherein, if the at least one PDCCH includes the COT structure indication and the configured paging time instance is allocated to a symbol subsequent to the at least one PDCCH within the COT, the circuitry, in operation, determines that the configured paging time instance is disabled.

7. The UE according to claim 4, wherein the circuitry, in operation, determines that the paging DCI is allocated to the configured paging time instance if the at least one PDCCH indicates that allocation of the paging DCI to the configured paging time instance is enabled.

8. The UE according to any of claims 4 to 7, wherein the COT includes a plurality of paging clusters each of which includes, for each of a plurality of beams swept by the scheduling node, a configured respective paging time instance, and the at least one PDCCH indicates whether or not each of the plurality of paging clusters is enabled.

**9.** The UE according to claim 3, wherein the COT structure indication specifies the allocation of the paging time instance to be monitored.

**10.** The UE according to any of claims 2 to 9, wherein the at least one PDCCH is a beam-specific PDCCH transmitted on one beam out of a plurality of beams swept by the scheduling node, and the allocation of the at least one downlink symbol which the circuitry determines to be the paging time instance to be monitored is beam-specific.

**11.** The UE according to any of claims 2 to 9, wherein the at least one PDCCH is common to a plurality of beams swept by the scheduling node and indicates:

a plurality of downlink symbols including, for each of the plurality of beams, a respective paging time instance to be monitored and
a starting beam for which the paging time instance to be monitored is allocated to an first symbol in time out the plurality of beams, and
the circuitry, in operation, determines the paging time instance to be monitored based on a configured circular order of beams beginning from the indicated starting beam.

**12.** A scheduling node, comprising:

circuitry which, in operation, performs allocation of a paging time instance to be monitored by a user equipment, UE, for paging downlink control information, DCI, and generates at least one physical downlink control channel, PDCCH, from which the allocation of the paging time instance to be monitored is determinable; and
a transceiver which, in operation, transmits the at least one PDCCH and performs transmission of the paging DCI in accordance with the allocation of the paging time instance.

**13.** The scheduling node according to claim 12, wherein the scheduling node operates on an unlicensed frequency, the transceiver, in operation, performs a listen before talk, LBT, operation, and
the circuitry, in operation acquires a channel occupancy time based on a result of the LBT operation, and allocates the paging time instance to be monitored for the paging DCI to resources within the COT.

**14.** A paging method to be performed by a user equipment, UE, comprising:

receiving at least one physical downlink control channel, PDCCH from which allocation of a paging time instance to be monitored for paging downlink control information, DCI, is determinable;
determining the allocation of the paging time instance to be monitored based on the received at least one PDCCH; and
performing monitoring for the paging DCI based on the determination of the allocation of the paging time instance.

**15.** A paging method to be performed by a scheduling node, comprising:

performing allocation of a paging time instance to be monitored by a user equipment, UE, for paging downlink control information, DCI;
generating at least one physical downlink control channel, PDCCH, from which the allocation of the paging time instance to be monitored is determinable;
transmitting the at least one PDCCH; and
performing transmission of the paging DCI in accordance with the allocation of the paging time instance.

**Fig. 1**

**Fig. 2**

**Fig. 3**

**Fig. 4**

**Enhanced Mobile Broadband**

Gigabytes in a second

3D video, UHD screens

Work and play in the cloud

Smart Home/Building

Augmented reality

Industry automation

Voice

Mission critical application, e.g. e-health

Smart City

Self Driving Car

**Future IMT**

**Massive Machine Type Communications**

**Ultra-reliable and Low Latency Communications**

## Fig. 5

| NSSF | NEF | NRF | PCF | UDM | AF |
|------|-----|-----|-----|-----|-----|

Nnssf    Nnef    Nnrf    Npcf    Nudm    Naf

Nausf    Namf    Nsmf

| AUSF | AMF | SMF |
|------|-----|-----|

N1    N2    N4

| UE | (R)AN | UPF | DN |
|----|-------|-----|-----|

N3    N6

N9

## Fig. 6

Fig. 7

Fig. 8

Fig. 9

S1010

Perform allocation of
paging time instance

S1020

Generate PDCCH

S1030

Transmit PDCCH

S1040

Receive PDCCH

S1050

Determine allocation of
paging time instance

S1060

Transmit paging DCI

S1070

Monitor paging DCI

**Fig. 10**

Fig. 11

| S1210 | 1.UE receives paging configuration, e.g. PF, PO, paging search space, etc, in SIB1 |

| S1220 | 2. Idle/inactive UE receives CO-PDCCH monitoring configuration (and/or paging indication monitoring configuration) in SIB1. For RRC-connected UE, it is possible to be configured by a dedicated RRC. |

| S1230 | 3. UE monitors both CO-PDCCH (and/or paging indication) and paging according to the configuration |

| S1240 | 4. UE decodes CO-PDCCH (or paging indication) to know whether the configured paging time instances are disabled |

S1250 — 5. Is paging time instance disabled?  N

Y

| S1260 | 6. UE skips paging monitoring according to the indication |

**Fig. 12**

Fig. 13

S1410 — 1.UE receives paging configuration, e.g. PF, PO, paging search space, etc, in SIB1, but assumes that those resources are not enabled

S1420 — 2. Idle/inactive UE receives CO-PDCCH monitoring configuration (and/or paging indication monitoring configuration) in SIB1. For RRC-connected UE, it is possible to be configured by a dedicated RRC.

S1430 — 3. UE monitors CO-PDCCH (and/or paging indication) according to the configuration

S1440 — 4. UE decodes CO-PDCCH (or paging indication) to know whether the configured paging time instances are enabled

S1450 — 5. Is paging time instance enabled?

N

Y

S1460 — 6. UE decodes paging over the enabled time instances

**Fig. 14**

**Fig. 15**

S1610 | 1.UE receives the configuration of control resource set (CORESET) and search space (SS) for paging in SIB1 (if not, follows the CORESET#0 and SS#0), but assumes those resources are not enabled.

S1620 | 2. Idle/inactive UE receives CO-PDCCH monitoring configuration (and optionally paging indication monitoring configuration) in SIB1. For RRC-connected UE, it is possible to be configured by a dedicated RRC

S1630 | 3. UE monitors CO-PDCCH (and optionally paging indication) according to the configuration

S1640 | 4. UE decodes CO-PDCCH (and optionally paging indication) to know whether any paging time instance is allocated

S1650 | 5. Is paging time instance indicated?

N

Y

S1660 | 6. From CO-PDCCH or paging indication, UE knows the corresponding beam for the indicated paging instance

S1670 | 7. UE decodes paging at the indicated time instance using the corresponding beam

**Fig. 16**

**Set of possible slot patterns given by NR standard specification**

| DDDDDDDDDDDDDD |
| UUUUUUUUUUUUUU |
| FFFFFFFFFFFFFF |
| DDDDDDDDDDDDDF |
| DDDDDDDDDDDDFF |
| DDDDDDDDDDDFFF |
| DDDDDDDDDDDDFU |
| DDDDDDDDDDDFUU |
| DFUUUUUUUUUUUU |

...

RRC configuration

| Code point | Pattern | |
|------------|---------|---|
| 0000 | DDDDDDDDDDDDDD | |
| 0001 | DDDDDDDDDDDDFU | |
| 0010 | DFUUUUUUUUUUUU | |
| 0011 | FFFFFFFFFFFFFF | |
| 0100 | UUUUUUUUUUUUUU | |
| 0101 | DDDDDDDDDDDDDD | DDDDDDDDDDDDFU |
| 0110 | DDDDDDDDDDDDFU | UUUUUUUUUUUUUU |
| ... | ... | |

A bit field in CO-PDCCH indicate one entry

**Fig. 17**

Europäisches
Patentamt
European
Patent Office
Office européen
des brevets

**EUROPEAN SEARCH REPORT**

Application Number

EP 19 18 9894

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MOTOROLA MOBILITY ET AL: "NR paging design", 3GPP DRAFT; R1-1720921 NR PAGING DESIGN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20171127 - 20171201 18 November 2017 (2017-11-18), XP051370299, Retrieved from the Internet: URL:http://www.3gpp.org/ftp/tsg%5Fran/WG1%5FRL1/TSGR1%5F91/Docs/ [retrieved on 2017-11-18] | 1,12,14, 15 | INV. H04W68/02 H04W88/02 H04W88/08 |
| Y | * paragraph 3 * | 2-11,13 | |
| Y | SONY: "NR unlicensed design considerations", 3GPP DRAFT; R1-1802066 NR UNLICENSED DESIGN CONSIDERATIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20180226 - 20180302 17 February 2018 (2018-02-17), XP051397804, Retrieved from the Internet: URL:http://www.3gpp.org/ftp/tsg%5Fran/WG1%5FRL1/TSGR1%5F92/Docs/ [retrieved on 2018-02-17] * paragraph 2.1 * * paragraph 2.3 * | 2-11,13 | TECHNICAL FIELDS SEARCHED (IPC) H04W |

-/--

The present search report has been drawn up for all claims

| Place of search | Date of completion of the search | Examiner |
|---|---|---|
| Munich | 6 December 2019 | Rabe, Marcus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OPPO: "Paging enhancements in NR-U", 3GPP DRAFT; R2-1905616 - PAGING ENHANCEMENTS IN NR-U, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20190513 - 20190517 13 May 2019 (2019-05-13), XP051729119, Retrieved from the Internet: URL:http://www.3gpp.org/ftp/Meetings%5F3GP P%5FSYNC/RAN2/Docs/R2%2D1905616%2Ezip [retrieved on 2019-05-13] * paragraph 2.1 * ----- | 1,12,14, 15 | |
| A | WO 2018/204703 A1 (IDAC HOLDINGS INC [US]) 8 November 2018 (2018-11-08) * paragraph [0071] - paragraph [0073] * ----- | 1-15 | |
| A | WO 2019/138060 A1 (PANASONIC IP CORP AMERICA [US]) 18 July 2019 (2019-07-18) * page 18, line 9 - line 20 * ----- | 1-15 | TECHNICAL FIELDS SEARCHED (IPC) |

The present search report has been drawn up for all claims

| Place of search | Date of completion of the search | Examiner |
|---|---|---|
| Munich | 6 December 2019 | Rabe, Marcus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 18 9894

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2019

| Patent document cited in search report | | Publication date | Patent family member(s) | | Publication date |
|---|---|---|---|---|---|
| WO 2018204703 | A1 | 08-11-2018 | NONE | | |
| WO 2019138060 | A1 | 18-07-2019 | EP | 3512272 A1 | 17-07-2019 |
| | | | WO | 2019138060 A1 | 18-07-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• Study on NR-based access to unlicensed spectrum, v16.0.0. *3GPP TR 38.889*